# EUROPÄISCHE PATENTSCHRIFT

(11) **EP 2 914 428 B1**
(45) Veröffentlichungstag und Bekanntmachung des Hinweises auf die Patenterteilung: **19.02.2020**
(21) Anmeldenummer: 13763209.7
(22) Anmeldetag: 10.09.2013
(51) Int. Cl.: B32B 17/10, C08K 5/00

(54) **WINDSCHUTZSCHEIBE MIT HEAD-UP-DISPLAY**
WINDSCREEN WITH HEAD-UP DISPLAY
PARE-BRISE AVEC VISIONNEUR TÊTE HAUTE

(30) Priorität: 31.10.2012 EP 12190708
(43) Veröffentlichungstag der Anmeldung: 09.09.2015
(73) Patentinhaber: Sekisui Chemical Co., Ltd., Osaka-shi, Osaka 530-8565 (JP)
(72) Erfinder: LABROT, Michael, 52072 Aachen (DE)
(74) Vertreter: Ter Meer Steinmeister & Partner
(86) Internationale Anmeldenummer: PCT/EP2013/068717
(87) Internationale Veröffentlichungsnummer: WO 2014/067697

(56) Entgegenhaltungen:
- EP-A1- 2 110 237
- DE-A1- 10 350 529
- DE-A1-102009 044 181
- US-A1- 2011 007 398
- US-A1- 2011 073 773
- US-A1- 2011 228 401
- US-B2- 7 230 767

## Beschreibung

Die Erfindung betrifft eine Windschutzscheibe mit Head-Up-Display, ein Verfahren zur Herstellung einer Folie mit lumineszierenden Partikeln und die Verwendung der Windschutzscheibe.

Head-Up-Displays (HUD) sind in der Luftfahrt weit verbreitet. Die im direkten Sichtfeld der Piloten montierten Systeme zeigen die wichtigsten Informationen des eigenen und der fremden Flugzeuge an. Diese im militärischen Bereich etablierten und vielgenutzten Systeme haben auch im zivilen Bereich, insbesondere im Automobilbereich, viele Anwendungsmöglichkeiten. So können Daten zur Geschwindigkeit, der Abstand zum vorausfahrenden Fahrzeug oder Richtungsangaben des Navigationsgerätes im Gegensatz zu Head-Down-Displays (HDD) direkt auf Augenhöhe des Fahrers angezeigt werden. Diese Möglichkeiten verbessern deutlich die Verkehrssicherheit des Fahrzeuges, da der Fahrer beim Blick auf die Instrumente die Verkehrslage und -situation nicht beobachten kann. Bei erhöhten Geschwindigkeiten des Fahrzeugs, beispielsweise auf der Autobahn, kann der "blind" zurückgelegte Fahrzeugweg beträchtlich sein und eine erhöhte Unfallgefahr bedingen.

Werden Head-Up-Displays (HUD) von einer externen Lichtquelle beleuchtet, so sind die Leuchtfelder in Abhängigkeit von den herrschenden Licht- und Witterungsverhältnissen nur schwer zu erkennen. Starkes Sonnenlicht und Lichtreflexion durch Wassertropfen oder Schmutzteilchen erschweren deutlich das Erkennen der im Head-Up-Display projizierten Informationen. Dies macht sich besonders deutlich bei virtuellen Bildern bemerkbar, welche auf die Bildfläche, beispielsweise die Frontscheibe, projiziert werden. Nachteile dieser klassischen HUDs sind zudem das begrenzte Sichtfeld zum Darstellen der projizierten Informationen. Ein möglicher Lösungsansatz sind reale, auf der Bildfläche über elektromagnetische Wellen angeregte Farbstoffe oder Partikel erzeugte Bilder. Hierbei kann prinzipiell die gesamte Scheibe als Informationsträger genutzt werden.

US 7,230,767 B2 offenbart ein Bildschirmsystem in einer Fahrzeugscheibe. Die Anordnung enthält lumineszierende Verbindungen auf der nach außen gerichteten Seite der Innenscheibe. Über eine Leuchtquelle werden die lumineszierenden Verbindungen angeleuchtet und erscheinen im Blickfeld eines Autofahrers.
DE 100 02 152 A1 offenbart eine transparent eingefärbte und UV-Licht absorbierende Folie. Die Folie wird über Extrusionsverfahren hergestellt, bei dem ein Thermoplast und ein in der Folie lösbarer Farbstoff gemischt und anschließend gemeinsam extrudiert werden.
DE 10 2009 044 181 A1 offenbart eine Verbundglasscheibe mit einen lumineszierenden Partikel, wobei die PVB-Folie eine Lichttransmission von größer 70 % bei einer Wellenlänge von 405 nm aufweist.
Aufgrund der Größe der Scheibe und der Tendenz der Partikel, sich in der Klebeschicht gleichmäßig zu verteilen, sind relativ große Mengen der farbgebenden Partikel erforderlich. Große Partikelmengen sind jedoch in vielen Fällen sehr teuer. Gleichzeitig beeinflussen die Partikel die Anmutung (optische Erscheinung) der Scheibe und diese wird verbessert, wenn die Partikel nur in einem begrenzten Bereich des Sichtfeldes der Scheibe enthalten sind. Die Anregung der lumineszierenden Partikel durch das Sonnenlicht kann nicht komplett verhindert werden, so dass die Partikel in der Scheibe unter Umständen ein leichtes farbiges oder milchig weißes Schimmern aufweisen.
DE 103 50 529 A1 offenbart eine Verbundscheibe als Head-Up Anzeigesystem. Die Verbundscheibe weist ein lumineszierendes Element auf, welches zumindest auf einen Bereich einer Oberfläche der Scheiben oder der Zwischenschicht aufgebracht, beispielsweise aufgedruckt ist.
EP 2 110 237 A1 offenbart Zwischenschicht mit eingelagerten lumineszierenden Partikeln zur Herstellung von Verbundscheiben. Die lumineszierenden Partikel sind lediglich im Randbereich der Zwischenschicht beziehungsweise der Verbundscheibe angeordnet.
US 2011/0073773 A1 offenbart eine Verbundscheibe mit lumineszierenden Partikeln, welche in Form von Piktogrammen im Bereich des opaken Abdecksiebdrucks im Randbereich aufgedruckt sind.
US-A-2011228401 offenbart eine Anzeigevorrichtung mit einem optischen Filter.
US-A-2011007398 offenbart eine Flachbildschirm-Anzeigevorrichtung und insbesondere einen Anzeigefilter und ein Schutzgehäuse mit einer Abstufung.

Die Aufgabe der Erfindung liegt darin, eine verbesserte Verbundglasscheibe für Head-Up- Displays bereitzustellen. Die Verbundglasscheibe soll den Einsatz teurer Partikel reduzieren, einfach herstellbar sein und den ästhetischen Anforderungen im Fahrzeugbereich genügen.

Die Aufgabe der vorliegenden Erfindung wird erfindungsgemäß durch eine Windschutzscheibe für Head-Up-Displays gemäß dem unabhängigen Anspruch 1 gelöst. Bevorzugte Ausführungen gehen aus den Unteransprüchen hervor.

Ein erfindungsgemäßes Verfahren zur Herstellung einer Folie mit lumineszierenden Partikeln und deren Verwendung gehen aus weiteren unabhängigen Ansprüchen hervor.

Die erfindungsgemäße Windschutzscheibe für Head-Up-Displays in Fahrzeugen umfasst mindestens eine Verbundscheibe aus einer ersten Scheibe und einer zweiten Scheibe sowie eine zwischen der ersten Scheibe und der zweiten Scheibe angeordnete Zwischenschicht. Die Zwischenschicht umfasst oder besteht aus mindestens einer ersten thermoplastischen Folie. Die thermoplastische Folie umfasst bevorzugt PVB (Polyvinylbutyral) oder EVA (Poly-Ethylvinylacetat). Optional können auch Polybutylenterephthalat (PBT), Polycarbonat (PC), Polyethylenterephthalat (PET) und Polyethylennaphthalat (PEN), Polyvinylchlorid (PVC), Polyvinylfluorid (PVF), Polyvinylbutyral (PVB) ohne Weichmacher und/oder Copolymere davon, besonders bevorzugt Polyethylenterephthalat (PET) enthalten sein. Die erste thermoplastische Folie enthält lumineszierende Partikel. Lumineszierende Partikel enthalten im Sinne der Erfindung organische und/oder anorganische chromophore oder lumineszierende Verbindungen, Ionen, Aggregate und/oder Moleküle. Lumineszenz beinhaltet Fluoreszenz und/oder Phosphoreszenzprozesse, daher die Anregung mit elektromagnetischer Strahlung und die Emission elektromagnetischer Strahlung. Die emittierte Strahlung weist bevorzugt eine andere Wellenlänge als die anregende Strahlung auf. Die emittierte Strahlung weist bevorzugt eine höhere Wellenlänge auf.

Die erste thermoplastische Folie enthält ein Leuchtfeld mit lumineszierenden Partikeln und umfasst einen weiteren Bereich ohne lumineszierende Partikel. Der Ausdruck "Leuchtfeld" bedeutet im Sinne der Erfindung einen Bereich der thermoplastischen Folie, welcher lumineszierende Partikel enthält. Die lumineszierenden Partikel sind bevorzugt homogen innerhalb des Leuchtfelds verteilt. Der Ausdruck "ohne lumineszierende Partikel" bedeutet im Sinne der Erfindung eine lokale Konzentration an lumineszierenden Partikeln von weniger als 3 % der mittleren Konzentration des Leuchtfeldes an lumineszierenden Partikeln. Das Leuchtfeld ist nicht scharf von den restlichen Bereichen der ersten thermoplastischen Folie abgegrenzt, der Übergang erfolgt graduell. Das Leuchtfeld umfasst bevorzugt 10 % bis 90 %, besonders bevorzugt 15 % bis 60% bezogen auf das Volumen der ersten thermoplastischen Folie. Die erfindungsgemäße Konzentration der lumineszierenden Partikel auf nur einen Teilbereich der ersten thermoplastischen Folie erlaubt einen sparsamen und kostengünstigen Einsatz der lumineszierenden Partikel in dem

Bereich der Folie, welcher für die HUD Funktion vorgesehen ist. Zugleich verbessert sich die Anmut der gesamten Windschutzscheibe.

Das Leuchtfeld ist bevorzugt zumindest teilweise im Durchsichtbereich der Windschutzscheibe angeordnet. Mit Durchsichtbereich wird dabei der Bereich der Scheibe bezeichnet, welcher zur Durchsicht vorgesehen und geeignet ist. Der Durchsichtbereich der Windschutzscheibe ist insbesondere transparent und weist keine opaken, bedruckten Bereiche auf, wie beispielsweise den üblichen umlaufenden Abdecksiebdruck im Randbereich.

Das Leuchtfeld erstreckt sich bevorzugt über die gesamte Breite der Verbundscheibe. Das ist aus herstellungstechnischen Gründen hinsichtlich der coextrudierten thermoplastischen Folie vorteilhaft und ermöglicht die Darstellung von Anzeigebildern in einem vorteilhaft großen Bereich.

Das Leuchtfeld ist bevorzugt in der unteren Hälfte der Verbundscheibe angeordnet. Der besondere Vorteil liegt darin, dass der Fahrer die Augen nicht von dem vor ihm liegenden Straßengeschehen nehmen muss, um die Anzeige auf dem Leuchtfeld zu erkennen. Die Anzeige liegt im normalen Blickfeld des Fahrers.

Die obere Begrenzung des Leuchtfeldes weist bevorzugt einen Abstand von der unteren Kante der Verbundscheibe auf, welcher von 10 % bis 50 %, bevorzugt von 20 % bis 40 % der Scheibenhöhe beträgt. Das ist vorteilhaft im Hinblick auf die Größe des Leuchtfeldes und die Einsparung von lumineszierenden Partikeln.

Ist der Randbereich der Verbundscheibe mit einem umlaufenden opaken Abdecksiebdruck versehen, wie er für Windschutzscheiben im Fahrzeugbereich üblich ist, so beträgt der Abstand zwischen der unteren Kante der Verbundscheibe und der unteren Begrenzung des Leuchtfeldes bevorzugt kleiner oder gleich, besonders bevorzugt kleiner der Breite dieses Abdecksiebdrucks. Das ist aus ästhetischen Gründen vorteilhaft, weil der Übergang zwischen dem Leuchtfeld und dem Bereich ohne lumineszierende Partikel vom Abdecksiebdruck verdeckt wird.

In einer besonders bevorzugten Ausgestaltung ist die untere Begrenzung des Leuchtfeldes an der unteren Seitenkante der Scheibe angeordnet. Der Abstand zwischen der unteren Kante der Verbundscheibe und der unteren Begrenzung des Leuchtfeldes beträgt also 0 cm. Eine thermoplastische Folie mit einem solchen Leuchtfeld ist besonders vorteilhaft einfach herstellbar.

Die Begriffe "unten"/"untere" und "oben"/"obere" sind hier in Einbaulage der erfindungsgemäßen Windschutzscheibe zu verstehen. Die obere Kante der Scheibe ist die sogenannte Dachkante (also die in Einbaulage dem Dach zugewandte Kante). Die untere Kante der Scheibe ist die sogenannte Motorkante (also die in Einbaulage dem Motorraum zugewandte Kante. Auf Richtungs- und Positionsangaben anderer Elemente sind in diesem Sinne zu verstehen. So ist die obere Begrenzung des Leuchtfeldes diejenige Begrenzung, welche der oberen Kante der Scheibe zugewandt ist. Die Scheibenhöhe ist entsprechend der Abstand zwischen der oberen und der unteren Kante der Scheibe.

Das lumineszierende Partikel enthält bevorzugt ein Anregungsmaximum im Bereich von 380 nm bis 420 nm und/oder ein Emissionsmaximum im Bereich von 430 nm bis 500 nm. Das erfindungsgemäße Anregungsmaximum im Bereich von 380 nm bis 420 nm ermöglicht die Anregung mit schwachem oder nicht sichtbarem Licht und vermindert so das Auftreten von störenden, sichtbaren Lichtreflexen.

Das lumineszierende Partikel enthält bevorzugt Benzopyrane, Naphthopyrane, 2H-Naphthopyrane, 3H-Naphthopyrane, 2H-Phenanthropyrane, 3H-Phenanthropyrane, Cumarine, Xanthine, Naphathalsäurederivate, Oxazole, Stilbene, Styryle, Perylene, Lanthanoide, bevorzugt Y₂O₃:Eu, YVO₄:Tm, Y₂O₂S:Pr, Gd₂O₂S:Tb und/oder Gemische davon.

Das lumineszierende Pigment enthält bevorzugt ein Hydroxyalkylterephthalat mit der Formel: R₁-COO-P(OH)x(1-4)-COO-R₂, wobei R₁, R₂ ein Alkyl- oder Allylrest mit 1 bis 10 C Atomen ist, P ein Phenylring, OH am Phenylring gebundene Hydroxylgruppen und x die Anzahl der am Phenylring gebundenen Hydroxylgruppen. Die allgemeine Strukturformel ist:

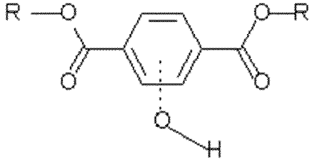

Das lumineszierende Pigment enthält bevorzugt Diethyl-2,5-dihydroxyterephtalat. Die Strukturformel ist:

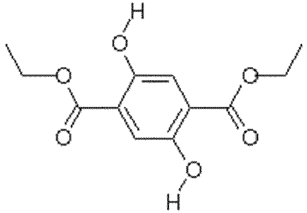

Das Leuchtfeld enthält bevorzugt 2 g bis 5 g lumineszierende Partikel, insbesondere Hydroxyalkylterephthalate, pro m² Folie. Der Ausdruck "Leuchtfeld" bedeutet im Sinne der Erfindung einen Bereich der thermoplastischen Folie, welcher bevorzugt 2 g bis 5 g lumineszierende Partikel pro m² Folie enthält. Die Partikelkonzentration wird dabei so angepasst, dass die erste thermoplastische Folie 2 g bis 5 g lumineszierende Partikel pro m² Folie enthält. Dieser Konzentrationsbereich erlaubt eine ausreichende Konzentration an lumineszierenden Partikeln, um ein ausreichend starkes Lichtsignal im Leuchtfeld zu erzeugen und gleichzeitig eine Transmission des Lasers durch die Scheibe verhindert.

Die thermoplastische Zwischenschicht umfasst bevorzugt weitere thermoplastische Folien. Die weiteren thermoplastischen Folien enthalten bevorzugt Polyvinylbutyral (PVB), Poly-Ethylvinylacetat (EVA), Polybutylenterephthalat (PBT), Polycarbonat (PC), Polyethylenterephthalat (PET) und Polyethylennaphthalat (PEN), Polyvinylchlorid (PVC), Polyvinylfluorid (PVF), Polyamide (PA) Polyvinylbutyral (PVB) ohne Weichmacher und/oder Copolymere davon, besonders bevorzugt Polyethylenterephthalat (PET) und/oder Polyvinylbutyral (PVB) mit UV-Blockern.

Die thermoplastische Zwischenschicht umfasst bevorzugt die erfindungsgemäße erste thermoplastische Folie, eine zweite thermoplastische Folie aus Polyethylenterephthalatfolie (PET) und eine dritte thermoplastische Folie aus Polyvinylbutyralfolie (PVB) mit UV-Blockern. Der Ausdruck "aus" ist im Sinne der Erfindung gleichbedeutend mit dem Ausdruck "enthaltend". Dieser Trilayer ermöglicht über die erste thermoplastische Zwischenschicht die Anzeige eines HUD-Piktograms. Die angrenzende zweite thermoplastische Zwischenschicht umfasst bevorzugt Polyethylenterephthalatfolie (PET). Die zweite thermoplastische Zwischenschicht dient als Diffusionssperre für das lumineszierende Partikel. Die dritte thermoplastische Zwischenschicht ist bevorzugt als äußere, der Lichteinstrahlung zugewandten Schicht angeordnet. Die in der PVB - Folie enthaltenen UV-Blocker, beispielsweise Benzophenon, Hydroxybenzophenon oder Dialkyldithiocarbamate, verringern die Anregung der in der ersten thermoplastischen Folie enthaltenen lumineszierenden Partikel durch Tages- oder Streulicht. Diese Anordnung vermindert somit insbesondere bei Tageslicht deutlich die Verzerrung oder Verwischung eines angezeigten Piktogramms.

Die Konzentration an lumineszierendem Partikel nimmt an den Grenzen außerhalb des Leuchtfelds graduell, d. h. in einem definierten Übergangsbereich, ab. Dieser graduelle Übergang vermeidet die Bildung von scharfen Kanten zwischen der Zwischenschicht mit lumineszierendem Partikel und Bereichen der Zwischenschicht ohne lumineszierendes Partikel. Die scharfen Kanten könnten sonst vom Auge des Betrachters als farbliche Veränderungen wahrgenommen werden.

Der Übergangsbereich zwischen dem Leuchtfeld und dem weiteren Bereich weist in einer vorteilhaften Ausgestaltung zumindest einen Abschnitt mit einer Ausdehnung von 1 cm bis 25 cm, bevorzugt von 5 cm bis 15 cm auf. Das ist besonders vorteilhaft im Hinblick einerseits auf die Vermeidung scharfer Kanten, wodurch sich eine untere Grenze der Ausdehnung ergibt, und andererseits auf die Einsparung von lumineszierenden Partikeln, woraus sich eine obere Grenze ergibt. Die Ausdehnung des Übergangsbereichs muss nicht über seine gesamte Breite konstant sein.

Der Konzentrationsgradient der lumineszierenden Partikeln im Übergangsbereich ist bevorzugt linear, was im Hinblick auf die einfache Herstellung vorteilhaft ist, kann aber im Grunde jeden beliebigen Verlauf aufweisen.

Die Zwischenschicht umfasst bevorzugt einen Bandfilter. Der Bandfilter kann bevorzugt auf einer weiteren thermoplastischen Folie innerhalb der Zwischenschicht untergebracht sein. Der Bandfilter beinhaltet noch eine zusätzliche Sonnenschutzfunktion in der Windschutzscheibe. Der Bandfilter umfasst bevorzugt einen farbigen Aufdruck auf der thermoplastischen Folie. Der Bandfilter ist bevorzugt, bezogen auf den Einbauzustand im Fahrzeug, im Dachkantenbereich der Zwischenschicht angeordnet.

Die Erfindung umfasst des Weiteren ein Verfahren zur Herstellung einer Folie mit lumineszierenden Partikeln. Ein thermoplastisches Polymer, beispielsweise PVB, EVA, PBT, PC, PA, PET, PEN, PVC oder PVF, und lumineszierende Partikel werden in einem Extruder, bevorzugt bei 150 °C bis 200 °C, homogenisiert sowie co-extrudiert. Dazu werden die lumineszierenden Partikeln bevorzugt in geschmolzenem thermoplastischem Polymer gelöst und gemeinsam mit thermoplastischem Polymer ohne lumineszierende Partikel in einer entsprechenden Extrusionsdüse extrudiert. Der Temperaturbereich von 150 °C bis 200 °C erlaubt ein Schmelzen des Polymers und der lumineszierenden Partikel, ohne dass die lumineszierenden Partikel zersetzt werden. Gleichzeitig wird über eine Extrusionsdüse des Extruders eine erste thermoplastische Folie erhalten. Entsprechend der Zumischung des lumineszierenden Partikels und der Einstellung der Extrusionsdüse ergeben sich begrenzte Bereiche der thermoplastischen Folie, welche eine erhöhte und definierte Konzentration an lumineszierenden Partikeln aufweisen. Anhand der dem Fachmann geläufigen Düsengeometrie lassen sich unterschiedlich große Bereiche mit lumineszierenden Partikeln, Übergangsbereiche, wobei die Konzentration an lumineszierenden Partikeln graduell abnimmt, und Bereiche ohne lumineszierende Partikel in einer fertigen Folie realisieren. Die Zumischung des lumineszierenden Partikels erfolgt so, dass die erste thermoplastische Folie mindestens ein Leuchtfeld mit, bevorzugt 2 g/m² bis 5 g/m², homogen verteilten lumineszierenden Partikeln umfasst und einen weiteren Bereich ohne lumineszierende Partikel enthält.

Die Erfindung umfasst des Weiteren eine Vorrichtung zum Anzeigen eines Piktogramms, Schriftzeichen und/oder Zahlen. Die erfindungsgemäße Vorrichtung umfasst eine erfindungsgemäße Verbundglasscheibe und eine zwischen der Verbundglasscheibe angeordnete erfindungsgemäße Zwischenschicht. Eine auf die Verbundglasscheibe gerichtete Leuchtquelle emittiert elektromagnetische Strahlung auf die Verbundglasscheibe. Die von der Leuchtquelle emittierte Strahlung wird von den lumineszierenden Partikeln in der Klebeschicht absorbiert und mit veränderter Wellenlänge wieder emittiert. Diese emittierte Strahlung wird vom Betrachter als Bildpunkt auf der Scheibe wahrgenommen. Die Leuchtquelle umfasst bevorzugt einen Diodenlaser oder Laserscanner. Die einzelnen Scheiben der Verbundglasscheibe weisen bevorzugt eine Dicke von 1 mm bis 8 mm, besonders bevorzugt 1,4 mm bis 2,5 mm auf.

Die erste thermoplastische Folie wird bevorzugt alleine oder in Verbund mit weiteren thermoplastischen Zwischenschichten analog der Geometrie einer Verbundscheibe, bevorzugt entlang den Abmessungen der Windschutzscheibenunterkante gedehnt, gereckt und/oder gestreckt. Dies ermöglicht eine Anpassung der Leuchtfelder an die Scheibengeometrie.

Die Erfindung umfasst des Weiteren die Verwendung der erfindungsgemäßen Windschutzscheibe in Head-Up-Displays, Fahrzeugen, Flugzeugen und/oder Hubschraubern.

Im Folgenden wird die Erfindung anhand von einer Zeichnung näher erläutert. Die Zeichnung ist eine rein schematische Darstellung und nicht maßstabsgetreu. Sie schränkt die Erfindung in keiner Weise ein.

Es zeigen:
Figur 1 eine schematische Ansicht der erfindungsgemäßen Windschutzscheibe,
Figur 2 eine schematische Ansicht einer bevorzugten Ausführungsform der erfindungsgemäßen Windschutzscheibe,
Figur 3 einen Querschnitt der erfindungsgemäßen Vorrichtung,
Figur 4 einen Querschnitt einer bevorzugten Ausführungsform der erfindungsgemäßen Vorrichtung und
Figur 5 ein Fließdiagramm des erfindungsgemäßen Verfahrens.

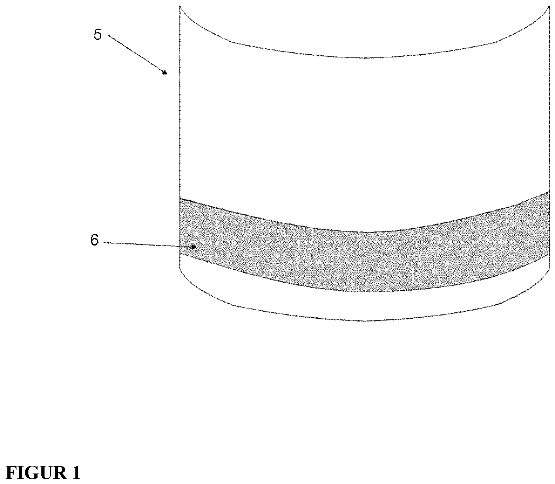

Figur 1 zeigt eine schematische Ansicht der erfindungsgemäßen Windschutzscheibe. Die erfindungsgemäße Verbundglasscheibe (5) umfasst ein Leuchtfeld (6) mit nicht gezeigten lumineszierenden Partikeln (4). Das Leuchtfeld (6) ist nur in dem Teilbereich der Verbundglasscheibe (5) angeordnet, welcher für ein Head-Up-Display benötigt wird.

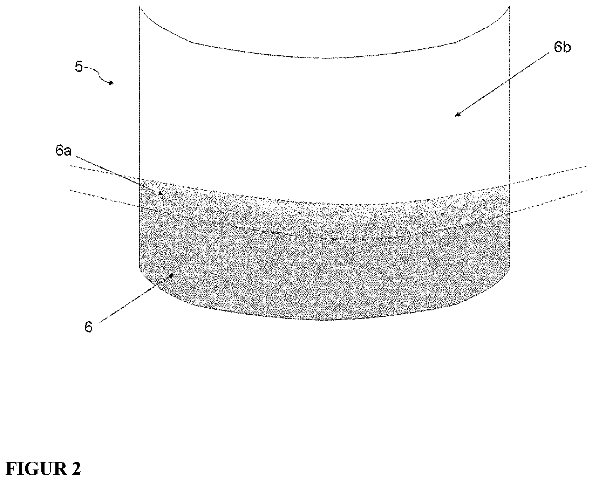

Figur 2 zeigt eine schematische Ansicht einer bevorzugten Ausführungsform der erfindungsgemäßen Windschutzscheibe. Das Leuchtfeld (6) bildet den unteren Teil der Verbundglasscheibe (5). In dem Übergangsbereich (6a) nimmt die Konzentration an lumineszierendem Partikel (4) graduell ab und ist im funktionsfreien Bereich (6b) nur in Spuren vorhanden.

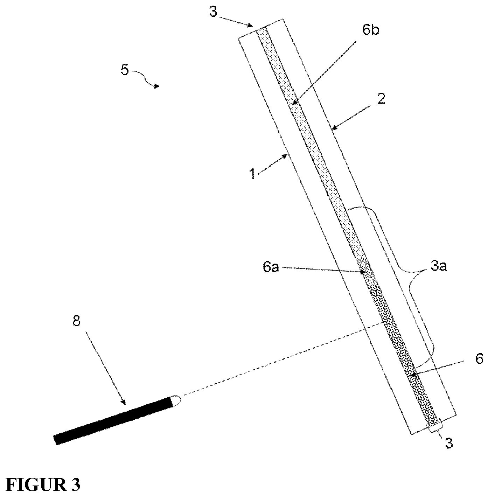

Figur 3 zeigt einen Querschnitt der erfindungsgemäßen Verbundglasscheibe (5). Zwischen einer ersten Scheibe (1) und einer zweiten Scheibe (2) ist eine Zwischenschicht (3) angeordnet. Die Zwischenschicht (3) umfasst eine (einzige) erste thermoplastische Folie (3a), innerhalb der thermoplastischen Folie (3a) bilden nicht gezeigte lumineszierende Partikel (4) ein Leuchtfeld (6). Über eine Leuchtquelle (8), beispielsweise einen Laser, können die lumineszierenden Partikel (4) gezielt lokal zu Bildpunkten angeregt werden. Durch eine Bewegung der Leuchtquelle (8) können somit Zeichen wie Zahlen, Buchstaben oder Piktogramme im Leuchtfeld (6) der Verbundglasscheibe (5) angezeigt werden. Da die lumineszierenden Partikel (4) nur im Bereich des Leuchtfeldes (6) angeordnet sind, werden insgesamt weniger lumineszierende Partikel (4) benötigt. Im Übergangsbereich (6a) nimmt die Konzentration an lumineszierenden Partikeln (4) graduell ab und ist im funktionsfreien Bereich (6b) bevorzugt nicht mehr sicht- und nachweisbar.

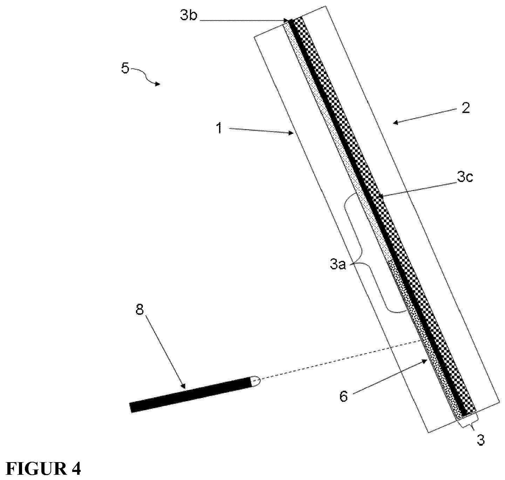

Figur 4 zeigt einen Querschnitt einer bevorzugten Ausführungsform der erfindungsgemäßen Vorrichtung. Der Grundaufbau entspricht dem in Figur 3 gezeigten und unterscheidet sich im Aufbau der Zwischenschicht (3). Die Zwischenschicht umfasst wie in Figur 3 eine erste thermoplastische Folie (3a) aus PVB mit lokal begrenztem Leuchtfeld (6) mit Diethyl-2,5-dihydroxyterephtalat als lumineszierende Partikel (4). Das Leuchtfeld (6) weist bevorzugt eine homogene Verteilung des lumineszierenden Partikels (4) auf. Benachbart zur ersten thermoplastischen Folie (3a) ist eine zweite thermoplastische Folie (3b) aus PET als Diffusionssperre zu einer dritten thermoplastischen Folie (3c) aus PVB mit UV-Blockern angeordnet. Die zweite thermoplastische Folie (3b) verhindert die Diffusion und damit Ausdünnung von lumineszierendem Partikel (4) in die dritte thermoplastische Folie (3c). Dieser Trilayeraufbau aus den drei thermoplastischen Folien (3a, 3b und 3c) verringert die Menge an benötigtem lumineszierendem Partikel (4). Die UV-Blocker, beispielsweise Benzophenone, in der dritten thermoplastischen Folie (3c) verhindern die Alterung der lumineszierenden Partikel (4) oder deren elektronische Anregung durch Sonnenlicht.

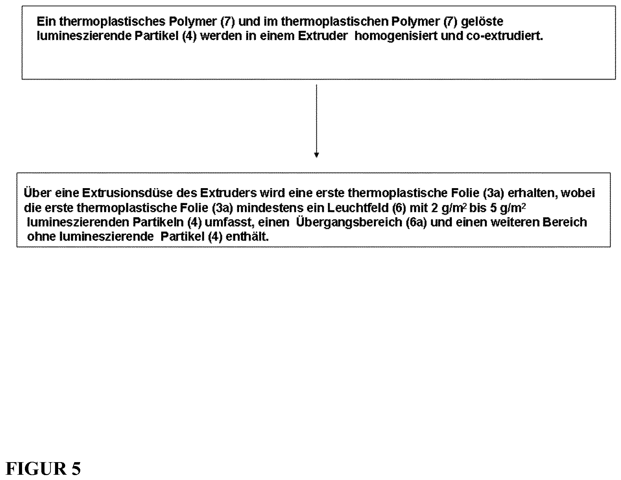

Figur 5 zeigt ein Fließdiagramm des erfindungsgemäßen Verfahrens. Ein thermoplastisches Polymer (7), beispielsweise PVB, und Diethyl-2,5-dihydroxyterephtalat als lumineszierende Partikel (4) werden in einem Extruder, bevorzugt bei 150 °C bis 200 °C, homogenisiert sowie co-extrudiert. Dazu werden die lumineszierenden Partikel (4) bevorzugt in geschmolzenem PVB gelöst und gemeinsam mit PVB ohne lumineszierenden Partikel (4) in einer entsprechenden Extrusionsdüse extrudiert. Gleichzeitig wird über eine Extrusionsdüse des Extruders eine erste thermoplastische Folie (3a) erhalten. Entsprechend der Zumischung des lumineszierenden Partikels (4) und der Einstellung der Extrusionsdüse ergeben sich lokale Bereiche (Leuchtfelder (6)) der ersten thermoplastischen Folie (3a), welche (eine erhöhte Konzentration an) homogen verteilten lumineszierenden Partikeln (4) aufweisen. Die Zumischung des lumineszierenden Partikels erfolgt so, dass die erste thermoplastische Folie mindestens ein Leuchtfeld (6) mit 2 g/m² bis 5 g/m² lumineszierenden Partikeln (4) umfasst und einen weiteren Bereich (6b) ohne lumineszierende Partikel (4) enthält.

### Bezugszeichenliste

- (1): erste Scheibe
- (2): zweite Scheibe
- (3): Zwischenschicht
- (3a): erste thermoplastische Folie
- (3b): zweite thermoplastische Folie
- (3c): dritte thermoplastische Folie
- (4): lumineszierendes Partikel
- (5): Verbundscheibe
- (6): Leuchtfeld
- (6a): Übergangsbereich
- (6b): funktionsfreier (im Hinblick auf HUD) Bereich
- (7): thermoplastisches Polymer
- (8): Leuchtmittel/Lichtquelle

## Patentansprüche

1. Windschutzscheibe für Head-Up-Displays in Fahrzeugen mindestens umfassend:
a. eine Verbundscheibe (5) aus einer ersten Scheibe (1) und einer zweiten Scheibe (2) sowie einer zwischen der ersten Scheibe (1) und der zweiten Scheibe (2) angeordnete Zwischenschicht (3),
b. wobei die Zwischenschicht (3) eine erste thermoplastische Folie (3a) umfasst,
c. wobei die erste thermoplastische Folie (3a) ein Leuchtfeld (6) mit lumineszierenden Partikeln (4) umfasst und einen weiteren Bereich (6b) mit einer lokalen Konzentration an lumineszierenden Partikeln (4) von weniger als 3% der mittleren Konzentration des Leuchtfeldes (6) an lumineszierenden Partikeln (4) enthält und
d. wobei benachbart zum Leuchtfeld (6) die Konzentration an lumineszierenden Partikeln (4) in einem Übergangsbereich (6a) graduell abnimmt.

2. Windschutzscheibe nach Anspruch 1, wobei der Übergangsbereich (6a) zwischen dem Leuchtfeld (6) und dem weiteren Bereich (6b) eine Ausdehnung von 1 cm bis 25 cm, bevorzugt von 5 cm bis 15 cm aufweist.

3. Windschutzscheibe nach Anspruch 1 oder 2, wobei das Leuchtfeld (6) in der unteren Hälfte der Verbundscheibe (5) angeordnet ist und sich über die gesamte Breite der Verbundscheibe (5) erstreckt.

4. Windschutzscheibe nach einem der Ansprüche 1 bis 3, wobei die obere Begrenzung des Leuchtfeldes (6) einen Abstand von der unteren Kante der Verbundscheibe (5) aufweist, welcher von 10 % bis 50 %, bevorzugt von 20 % bis 40 % der Scheibenhöhe beträgt.

5. Windschutzscheibe nach einem der Ansprüche 1 bis 4, wobei das lumineszierende Partikel (4) ein Anregungsmaximum im Bereich von 380 nm bis 420 nm und/oder ein Emissionsmaximum im Bereich von 430 nm bis 500 nm aufweist.

6. Windschutzscheibe nach einem der Ansprüche 1 bis 5, wobei das Leuchtfeld (6) 2 g/m² bis 5 g/m² lumineszierenden Partikeln (4) enthält und wobei die lumineszierenden Partikeln (4) bevorzugt homogen innerhalb des Leuchtfeldes (6) verteilt, besonders bevorzugt mit der ersten thermoplastischen Folie (3a) extrudiert sind.

7. Windschutzscheibe nach einem der Ansprüche 1 bis 6, wobei das lumineszierende Partikel (4) Hydroxyalkylterephthalat mit der Formel: R₁-COO-P(OH)x-COO-R₂, wobei R₁, R₂ ein Alkyl-, Aryl- oder Allylrest mit 1 bis 10 C Atomen ist, P ein Phenylring, OH am Phenylring gebundene Hydroxylgruppen und x eine ganze Zahl von 1 bis 4 ist, bevorzugt Diethyl-2,5-dihydroxyterephtalat enthält.

8. Windschutzscheibe nach einem der Ansprüche 1 bis 7, wobei die thermoplastische Zwischenschicht (3) weitere thermoplastische Folien (3b, 3c,...) umfasst.

9. Windschutzscheibe nach einem der Ansprüche 1 bis 8, wobei die thermoplastischen Folien (3a, 3b, 3c,...) Polyvinylbutyral (PVB), Poly- Ethylvinylacetat (EVA), Polybutylenterephthalat (PBT), Polycarbonat (PC), Polyethylenterephthalat (PET), Polyethylennaphthalat (PEN), Polyamid (PA), Polyvinylchlorid (PVC), Polyvinylfluorid (PVF), Polyvinylbutyral (PVB) ohne Weichmacher und/oder Copolymere davon, besonders bevorzugt Polyethylenterephthalat (PET) und/oder Polyvinylbutyral (PVB) mit UV-Blockern enthalten.

10. Windschutzscheibe nach einem der Ansprüche 1 bis 9, wobei die thermoplastische Zwischenschicht (3) eine zweite thermoplastische Folie (3b) aus Polyethylenterephthalat (PET) und eine dritte thermoplastische Folie (3c) aus Polyvinylbutyral (PVB) mit UV-Blockern umfasst.

11. Verfahren zur Herstellung einer Folie mit lumineszierenden Partikeln, wobei
a. ein thermoplastisches Polymer (7) und lumineszierende Partikel (4) in einem Extruder homogenisiert und co-extrudiert werden und über eine Extrusionsdüse des Extruders eine erste thermoplastische Folie (3a) erhalten wird, wobei
b. die erste thermoplastische Folie (3a) mindestens ein Leuchtfeld (6) mit bevorzugt 2 g/m² bis 5 g/m², lumineszierenden Partikeln (4) umfasst und einen weiteren Bereich (6b) mit einer lokalen Konzentration an luminiszierenden Partikeln (4) von weniger als 3% der mittleren Konzentration des Leuchtfeldes (6) an lumineszierenden Partikeln (4) enthält, wobei in einem Übergangsbereich (6a) die Konzentration an lumineszierenden Partikeln (4) graduell abnimmt.

12. Verfahren nach Anspruch 11, wobei die erste thermoplastische Folie (3a) alleine oder in Verbund mit weiteren thermoplastischen Zwischenschichten (3b, 3c, ...) analog der Geometrie einer Verbundscheibe (5) gedehnt, gereckt und/oder gestreckt wird.

13. Vorrichtung zum Anzeigen eines Piktogramms, Schriftzeichen und/oder Zahlen, umfassend eine Verbundglasscheibe (5) nach einem der Ansprüche 1 bis 10 und eine auf die Verbundglasscheibe (5) gerichtete Leuchtquelle (8), die elektromagnetische Strahlung emittiert.

14. Vorrichtung nach Anspruch 13, wobei die Leuchtquelle (10) einen Laser, Scanner, UV-Quelle, bevorzugt einen Diodenlaser umfasst.

## Claims

1. A windshield for heads-up displays in motor vehicles comprising at least:
a. a laminated pane (5) consisting of a first pane (1) and a second pane (2) as well as an intermediate layer (3) provided between the first pane (1) and the second pane (2),
b. wherein the intermediate layer (3) comprises a first thermoplastic film (3a),
c. wherein the first thermoplastic film (3a) comprises a light field (6) containing luminescent particles (4) and includes another region (6b) having a local concentration of luminescent particles (4) of less than 3% of the average concentration of luminescent particles (4) in the light field (6), and
d. wherein the concentration of luminescent particles (4) decreases gradually in a transitional region (6a) adjacent to the light field (6).

2. The windshield according to claim 1, wherein the transitional region (6a) between the light field (6) and the additional region (6b) has an extent of 1 cm to 25 cm, preferably of 5 cm to 15 cm.

3. The windshield according to claim 1 or 2, wherein the light field (6) is arranged in the lower half of the laminated pane (5) and extends over the entire width of the laminated pane (5).

4. The windshield according to any one of claims 1 to 3, wherein the upper border of the light field (6) is a distance away from the lower edge of the laminated pane (5) amounting to 10% to 50%, preferably 20% to 40% of the height of the windshield.

5. The windshield according to any one of claims 1 to 4, wherein the luminescent particle (4) has an excitation maximum in the range of 380 nm to 420 nm and/or has a maximum emission in the range of 430 nm to 500 nm.

6. The windshield according to any one of claims 1 to 5, wherein the light field (6) contains 2 g/m² to 5 g/m² luminescent particles (4) and wherein the luminescent particles (4) are preferably distributed homogenously inside the light field (6), especially preferably being extruded with the first thermoplastic film (3a).

7. The windshield according to any one of claims 1 to 6, wherein the luminescent particle (4) contains hydroxyalkyl terephthalate with the formula: R₁-COO-P(OH)x-COO-R₂, where R₁ and R₂ denote an alkyl, aryl or allyl radical with 1 to 10 carbon atoms, P is a phenyl ring, OH denotes hydroxyl groups bound to the phenyl ring, and x is an integer from 1 to 4, preferably diethyl 2,5-dihydroxy terephtalate.

8. The windshield according to any one of claims 1 to 7, wherein the intermediate thermoplastic layer (3) comprises additional thermoplastic films (3b, 3c, ...).

9. The windshield according to any one of claims 1 to 8, wherein the thermoplastic films (3a, 3b, 3c, ...) contain polyvinylbutyral (PVB), polyethylvinyl acetate (EVA), polybutylene terephthalate (PBT), polycarbonate (PC), polyethylene terephthalate (PET), polyethylene naphthalate (PEN), polyamide (PA), polyvinyl chloride (PVC), polyvinyl fluoride (PVF), polyvinylbutyral (PVB), without plasticizers and/or copolymers thereof, especially preferably polyethylene terephthalate (PET) and/or polyvinylbutyral (PVB) with UV blockers.

10. The windshield according to any one of claims 1 to 9, wherein the thermoplastic layer (3) comprises a second thermoplastic film (3b) of polyethylene terephthalate (PET) and a third thermoplastic film (3c) of polyvinylbutyral (PVB) with UV blockers.

11. A method for producing a film containing luminescent particles, wherein
a. a thermoplastic polymer (7) and luminescent particles (4) are homogenized in an extruder and coextruded, and a first thermoplastic film (3a) is obtained by means of an extrusion nozzle, wherein
b. the first thermoplastic film (3a) comprises at least one light field (6), preferably containing 2 g/m² to 5 g/m² luminescent particles (4) and another region (6b) having a local concentration of luminescent particles (4) of less than 3% of the average concentration of luminescent particles (4) in the light field (6),
wherein the concentration of luminous particles (4) decreases gradually in a transitional region (6a).

12. The method according to claim 11, wherein the first thermoplastic film (3a) is elongated, stretched and/or drawn alone or in a laminated pane having additional intermediate thermoplastic layers (3b, 3c, ...) by analogy with the geometry of a laminated pane (5).

13. A device for displaying a pictogram, written characters and/or numerals, comprising a laminated pane of safety glass (5) according to any one of claims 1 to 10 and a light source (8) which emits electromagnetic radiation and is directed at the laminated pane (5).

14. The device according to claim 13, wherein the light source (10) comprises a laser, a scanner or a UV source, preferably a diode laser.

## Revendications

1. Pare-brise pour des affichages tête haute dans des véhicules, comprenant au moins :
a. une vitre composite (5) constituée d'une première vitre (1) et d'une seconde vitre (2) ainsi que d'une couche intermédiaire (3) agencée entre la première vitre (1) et la seconde vitre (2),
b. dans lequel la couche intermédiaire (3) comprend un premier film thermoplastique (3a),
c. dans lequel le premier film thermoplastique (3a) comprend un champ lumineux (6) avec des particules luminescentes (4) et contient une zone supplémentaire (6b) avec une concentration locale de particules luminescentes (4) inférieure à 3 % de la concentration moyenne de particules luminescentes (4) du champ lumineux (6) et
d. dans lequel la concentration de particules luminescentes (4) au voisinage du champ lumineux (6) diminue graduellement dans une zone de transition (6a).

2. Pare-brise selon la revendication 1, dans lequel la zone de transition (6a) entre le champ lumineux (6) et la zone supplémentaire (6b) a une étendue de 1 cm à 25 cm, de préférence de 5 cm à 15 cm.

3. Pare-brise selon la revendication 1 ou 2, dans lequel le champ lumineux (6) est agencé dans la moitié inférieure de la vitre composite (5) et s'étend sur toute la largeur de la vitre composite (5).

4. Pare-brise selon l'une des revendications 1 à 3, dans lequel la limite supérieure du champ lumineux (6) a une distance par rapport au bord inférieur de la vitre composite (5) qui représente de 10 % à 50 %, de préférence de 20 % à 40 %, de la hauteur de vitre.

5. Pare-brise selon l'une des revendications 1 à 4, dans lequel la particule luminescente (4) présente un maximum d'excitation dans la plage de 380 nm à 420 nm et/ou un maximum d'émission dans la plage de 430 nm à 500 nm.

6. Pare-brise selon l'une des revendications 1 à 5, dans lequel le champ lumineux (6) contient de 2 g/m² à 5 g/m² de particules luminescentes (4) et dans lequel les particules luminescentes (4) sont de préférence réparties de façon homogène à l'intérieur du champ lumineux (6) et sont, de manière particulièrement préférée, extrudées avec le premier film thermoplastique (3a).

7. Pare-brise selon l'une des revendications 1 à 6, dans lequel la particule luminescente (4) contient un téréphtalate d'hydroxyalkyle de formule : R₁-COO-P(OH)x-COO-R₂, dans laquelle R₁ et R₂ représentent un radical alkyle, aryle ou allyle possédant 1 à 10 atomes de C, P représente un cycle phénylique, OH représente des groupes hydroxyle liés au cycle phénylique et x représente un nombre entier de 1 à 4, et contient de préférence du diéthyl-2,5-dihydroxytérephtalate.

8. Pare-brise selon l'une des revendications 1 à 7, dans lequel la couche intermédiaire thermoplastique (3) comprend des films thermoplastiques supplémentaires (3b, 3c, ...).

9. Pare-brise selon l'une des revendications 1 à 8, dans lequel les films thermoplastiques (3a, 3b, 3c,...) contiennent du poly(butyral de vinyle) (PVB), du poly(éthylène-acétate de vinyle) (EVA), du poly(butylène téréphtalate) (PBT), du polycarbonate (PC), du poly(éthylène téréphtalate) (PET), du poly(éthylène naphtalate) (PEN), du polyamide (PA), du poly(chlorure de vinyle) (PVC), du poly(fluorure de vinyle) (PVF), du poly(butyral de vinyle) (PVB) sans plastifiants et/ou des copolymères de ceux-ci, de manière particulièrement préférée du poly(éthylène téréphtalate) (PET) et/ou du poly(butyral de vinyle) (PVB) avec des agents bloqueurs d'UV.

10. Pare-brise selon l'une des revendications 1 à 9, dans lequel la couche intermédiaire thermoplastique (3) comprend un deuxième film thermoplastique (3b) en polyéthylène téréphtalate (PET) et un troisième film thermoplastique (3c) en poly(butyral de vinyle) (PVB) avec des agents bloqueurs d'UV.

11. Procédé pour fabriquer un film avec des particules luminescentes, dans lequel
a. un polymère thermoplastique (7) et des particules luminescentes (4) sont homogénéisés et coextrudés dans une extrudeuse et un premier film thermoplastique (3a) est obtenu à l'aide d'une buse d'extrusion de l'extrudeuse,
b. dans lequel le premier film thermoplastique (3a) comprend au moins un champ lumineux (6) avec de préférence 2 g/m² à 5 g/m² de particules luminescentes (4) et contient une zone supplémentaire (6b) avec une concentration locale de particules luminescentes (4) inférieure à 3 % de la concentration moyenne de particules luminescentes (4) du champ lumineux (6),
dans lequel la concentration de particules luminescentes (4) diminue graduellement dans une zone de transition (6a).

12. Procédé selon la revendication 11, dans lequel le premier film thermoplastique (3a) est allongé, tendu et/ou étiré seul ou en combinaison avec des couches intermédiaires thermoplastiques supplémentaires (3b, 3c, ...) de manière analogue à la géométrie d'une vitre composite (5).

13. Dispositif pour afficher un pictogramme, des caractères et/ou des chiffres, comprenant une vitre composite (5) selon l'une des revendications 1 à 10 et une source de lumière (8) dirigée vers la vitre composite (5) et émettant un rayonnement électromagnétique.

14. Dispositif selon la revendication 13, dans lequel la source de lumière (10) comprend un laser, un scanner, une source d'UV, de préférence une diode laser.
